Europäisches Patentamt

European Patent Office

Office européen des brevets

(19)

(11) Numéro de publication: **0 323 778**

**A1**

(12)                          **DEMANDE DE BREVET EUROPEEN**

(21) Numéro de dépôt: **88403235.0**

(22) Date de dépôt: **19.12.88**

(51) Int. Cl.⁴: **C08G 12/38 , C08L 97/02 , B27N 3/04**

Le titre de l'invention a été modifié (Directives relatives à l'examen pratiqué à l'OEB, A-III, 7.3)

(30) Priorité: **23.12.87 FR 8717997**

(43) Date de publication de la demande: **12.07.89 Bulletin 89/28**

(84) Etats contractants désignés: **AT BE CH DE ES FR GB GR IT LI LU NL SE**

(71) Demandeur: **NORSOLOR S.A.**
**Tour Aurore Place des Reflets**
**F-92080 Paris la Defense Cédex 5(FR)**

(72) Inventeur: **Druet, Bernard**
**4, avenue du Maréchal Juin**
**F-60750 Choisy Aubac(FR)**
Inventeur: **Rochet, Gérald**
**9, Lotissement Communal**
**F-60300 Fontaines Chaaly(FR)**

(74) Mandataire: **Rieux, Michel**
**NORSOLOR Service Propriété Industrielle**
**Tour Aurore 18, Place des Reflets Cedex no. 5**
**F-92080 Paris la Défense 2(FR)**

(54) **Procédé de fabrication de résines urée-formol contenant de la mélamine.**

(57) - Procédé de préparation de résines urée-formol contenant au plus 10 % de mélamine.
- Procédé selon lequel la mélamine est ajoutée lors de la première étape avec les autres réactifs.
- Obtention de résines présentant des temps de gel réduits et des stabilités améliorées.

EP 0 323 778 A1

La présente invention concerne un nouveau procédé de fabrication de résines urée-formol contenant de la mélamine, elle a plus particulièrement pour objet un procédé de fabrication de résines urée-formol "dopées" mélamine à très faible dégagement de formol.

Les résines urée-formol sont des produits connus qui sont utilisés largement dans l'industrie du bois pour la fabrication en particulier de panneaux particules. Elles sont fabriquées de façon connue par condensation d'urée et de formol. à pH compris entre 4 et 7 et à une température voisine de l'ébullition : de préférence cette réaction de condensation est réalisée en plusieurs étapes.

Le principal inconvenient des résines urée-formol est de provoquer des émanations élevées de formol libre. On a essayé de réduire le taux de formol libre en mettant en oeuvre divers procédés de fabrication : malheureusement lorsque l'on veut atteindre des taux de formol particulièrement bas. L'expérience montre que cet objectif s'accompagne à la fois d'une diminution de la réactivité et de la stabilité des résines ainsi que d'une dégradation des propriétés mécanique des panneaux finis. On a aussi proposé pour supprimer le formol libre d'utiliser des résines dépourvues de formol en particulier des résines à base de solutions d'isocyanates. Malheureusement le problème des isocyanates est susceptible aussi de poser des problèmes de toxicologie.

Un autre moyen de limiter les émissions de formol libre consiste à ajouter des substances qui fixent ce composé. Parmi ces substances on peut par exemple citer l'urée, la mélamine, le phénol ou encore les farines à forte teneur en proteïnes. Malheureusement tous les procédés mettant en oeuvre ces additifs capables de fixer le formol en les ajoutant aux résines urée-formol ont des effets secondaires génants, en particulier ils retardent la condensation finale et par conséquent le durcissement des colles.

Parmi les procédés qui mettent en oeuvre de la mélamine, on a proposé en particulier de rajouter en fin de condensation de l'urée et du formol, de la mélamine dans la dernière étape de condensation. Un tel procédé, s'il permet d'obtenir des résines pouvant servir à fabriquer des panneaux de particules présentant des taux de formol libre tolérables alliés à des propriétés mécaniques acceptables, conduit par contre à des résines présentant des temps de gel élevés. Ces temps de gel élevés signifient que la résine urée-formol contenant de la mélamine additionnée d'un catalyseur de durcissement mettra beaucoup de temps pour durcir à chaud, ce qui signifie que dans une chaine de fabrication les durées de cycles de cuisson des panneaux sont élevées, ce qui diminue les cadences des production.

Le besoin se fait donc sentir de mettre au point des résines urée-formol contenant au plus 10 % de mélamine et qui présentent des temps de gel réduits.

La présente invention concerne une procédé de fabrication de résines urée-formol contenant au plus 10 % de mélamine et présentant un rapport molaire final $\frac{F}{NH_2}$ compris entre 0.5 et 0,575 les groupements

$NH_2$ étant la somme totale des groupements $NH_2$ d'urée et de mélamine mises en oeuvre, selon lequel on condense dans une première étape, une partie de l'urée, du formol à Ph acide, puis on ajoute de la mélamine à pH basique, l'urée restant étant ajoutée dans une troisième étape à pH basique, caractérisé en ce que le mélamine est ajoutée dans la première étape de condensation de l'urée et d'une source de formol, cette condensation étant conduite à pH acide, la quantité d'urée et de formol mis en oeuvre étant telle que le rapport molaire $\frac{F}{NH_2}$ à cette étape étant au plus égal à 1,5, les équivalents molaires des groupements $NH_2$ etant la somme totale des $NH_2$ d'urée et de mélamine mis en oeuvre.

On a trouvé qu'en opérant dans ces conditions on obtenait des résines urée-formol contenant moins de 10 % de mélamine qui présentent des temps de gel réduits ainsi que des stabilités au stockage particulièrement améliorées et une adhésivité à froid élevée.

Le procédé de la présente demande consiste à ajouter de la mélamine lors de la première étape de condensation de l'urée et une source de formol : cette condensation est conduite à pH acide compris entre 4,5 et 6,5. De façon connue au lieu d'utiliser du formol seul lors de cette étape de condensation il est possible aussi de mettre en oeuvre des précondensats d'urée et de formol. La quantité d'urée et de formol mise en oeuvre lors de cette étape, quelque soit la forme des réactifs mis en oeuvre, urée et formol séparément ou pré-condensats urée-formol et urée est telle que le rapport molaire $\frac{F}{NH_2}$ à cette étape est

au plus égale à 1,5, les groupements $NH_2$ étant la somme totale des $NH_2$ d'urée et de mélamine mises en oeuvre. De façon connue la quantité de mélamine mise en oeuvre est au plus égale à 10 % en poids par rapport au poids de la solution liquide de résine. De façon connue le procédé de la présente demande comporte une seconde étape d'addition du restant de l'urée. Cette seconde étape est conduite à une valeur du pH identique à celle de la 1er étape.

Les exemples suivants illustrent la présente invention. Les quantités sont exprimées en parties en poids.

Exemple 1

Dans un réacteur muni d'un réfrigérant, d'un agitateur et d'un dispositif de chauffage on introduit 14.500 parties de formol à 50 %, le pH est ajusté à 7,5 à l'aide d'une solution de soude puis on ajoute 5150 parties d'urée solide et 1650 parties de mélamine. Le rapport molaire $\frac{F}{NH_2}$ comme précédemment défini

est de 1,15. On chauffe le mélange réactionnel à une température de 98°C ; on refroidit ensuite le mélange réactionnel à 90°C et on acidifie ensuite à l'aide d'acide formique de façon à ce que le pH ne dépasse pas 5,6. On poursuit le chauffage à 85 - 90°C. Après refroidissement du mélange réactionnel 80°C et lorsque la viscosité atteint 450 - 500 m Pa.s à 40°C, on ajoute 7800 parties d'urée en maintenant le pH à 5,6. L'addition d'urée provoque un abaissement de la température qui est maintenue à 55 - 60°C. Lorsque la tolérance à l'eau du mélange réactionnel est de 2/1 (exprimée par le trouble à 25°C d'un mélange constitué de 3 volumes de résine pour 6 volumes d'eau. on neutralise le milieu à l'aide d'une solution de soude caustique jusqu'à ce que le pH soit voisin de 8. La solution de résine est concentrée ensuite sous vide vers 55°C : On élimine 1500 parties d'eau. La résine obtenue présente les caractérisques suivantes :

| - Viscosité 20°C | : | 900 m Pa.s |
|---|---|---|
| - Extrait sec | : | 65 % (mesuré par le poids de résidu d'un échantillon sèche 2 h à 120°C) |
| - pH | : | 8,5 |
| - Densité 20°C | : | 1,285 |
| - Temps de gel à 100°C | : | 80 secondes (avec 5% d'une solution de chlorure d'ammonium à 15 %) |
| - Temps de gel à 80°C | : | 4 min 30 sec. (avec 10 % de solution $NH_4$ck à 15 %). |

Au bout de 2 mois de conservation à 20°C, la résine présente une viscosité à 20°C de 1250 m Pa.s.

La résine obtenue est utilisée pour la fabrication de panneaux de particules 3 couches. Les conditions de fabrication de ces panneaux sont les suivantes :

| - Taux d'encollage en résine solide par rapport au poids de bois sec | : | 8 % en couche intérieure et 11 % en couche extérieure |
|---|---|---|
| - Taux de paraffine (Mobilcer à 6-%) | : | 0,5 % en couche intérieure et 0,7 % en couche extérieure |
| (exprimé en sec par rapport au poids de bois sec). | | |
| - Taux de durcisseur ($NH_4$cl) | : | 1,5 % en couche intérieure 0,75% en couche extérieure |
| (exprimé en sec par rapport au poids de ràésine solide). | | |

Les panneaux de particules sont cuits sous une pression de 3,5 N/mm2 à 180°C pendant 4 minutes. Les propriétés des panneaux obtenus sont les suivantes :

| - Epaisseur (mm) | : | 20,05 |
|---|---|---|
| - Masse volumique (kg/m3) | : | 25 |
| - Gonflement (dans l'eau 20°C, 24 heures) | | |
| . Selon NF B 51252 | : | 13,0 % |
| . Selon DIN N 68763 | : | 13,5 % |
| - Traction perpendiculaire (daN/cm2) | : | 8,1 |
| - Formol performateur (mg/100g panneau sec) | : | 9,0 |

Les propriétés ont été déterminées selon les normes suivantes :

| - Epaisseur | : | NFB 51200 |
| - Masse volumique | : | NFB 51222 |
| - Traction perpendiculaire | : | NFB 51250 |
| - Gonflement NF | : | NFB 51252 |
| - Gonflement DIN | : | 68763 |
| - Teneur en formol | : | CEN-EN120 (peforateur) |

## Exemple 2

L'exemple 1 est répété mais en mettant en oeuvre dans 4 essais différents 0, 2, 4 et 6 % de mélamine. Dans chaque essai, on ajuste les quantités de formol, d'urée et de mélamine (sauf dans le premier) de façon que le rapport molaire $\frac{F}{NH_2}$ dans la première étape soit de 1,145 ($\frac{F}{U}$ = 2,10 pour l'essai ne comportant pas de mélamine). Cette première étape est réalisée à pH acide jusqu'à une viscosité déterminée (valeurs données dans le tableau ci-après).

Dans une seconde étape, on ajoute de l'urée pour avoir un $\frac{F}{NH_2}$ de 0,532 ($\frac{F}{U}$ = 1,06 pour l'essai sans mélamine). La condensation est effectuée à pH acide, vers 55° C, jusqu'à une tolérance à l'eau déterminée (valeurs données dans le tableau ci-dessous):

| | Résine 0% Mélamine | 2 % Mélamine | 4 % Mélamine | 6 % Mélamine |
|---|---|---|---|---|
| 1er étape | | | | |
| pH condensation | 4,5 | 5,1 | 5,3 | 5,6 |
| Viscosité 40° C (m Pa.s) (fin étape) | 435 | 347 | 345 | 370 |
| 2ème étape | | | | |
| pH condensation | 5,5 | 5,1 | 5,3 | 5,6 |
| Tolérance eau (fin 2ème étape) | 3/1 à 26° C | 2/1 à 18° C | 2/1 à 24° C | 2/1 à 29° C |

Les caractéristiques des résines obtenues et des panneaux fabriqués avec ces résines dans les conditions citées dans l'exemple 1 sont résumées dans le tableau annexé.

## TABLEAU

| N° Essai | Essai 1 2% Mélamine | Essai 2 4% Mélamine | Essai 3 6% Mélamine | Essai 4 0% Mélamine |
|---|---|---|---|---|
| **RESINES** | | | | |
| Viscosité (20°C) (mPa.s) | 920 | 800 | 740 | 1015 |
| pH | 7,9 | 7,8 | 8,0 | 8,0 |
| Extrait sec % | 65,1 | 65,2 | 65,4 | 65,2 |
| Diluabilité à l'eau | 1/1 | 1/1 | 1/1 | > 1,5/1 |
| Temps de gel à 100°C (s) | 70 | 73 | 73 | 62 |
| Stabilité à 20°C (Viscosité après X jrs mPa.s | 1100 (37 jours) | 990 (36 jours) | 1025 (35 jours) | 1075 (32 jours) |
| après 2 mois | 1440 | 1200 | 1300 | 3700 |
| **PANNEAUX** | | | | |
| Epaisseur (mm) | 20,05 | 20,03 | 20 | 20,09 |
| Masse volumique (kg/m³) | 633,7 | 634,6 | 631,5 | 630,8 |
| Gonflement (eau 20°C,24H) | | | | |
| NF | 16,4 | 14,9 | 13,5 | 17,5 |
| DIN | 16,7 | 15,4 | 14,1 | 17,8 |
| Traction perpendiculaire | 7 | 7,8 | 8,4 | 6,3 |
| Formol perforateur | 7,7 | 8,2 | 8 | 8,5 |

## Exemple 3

L'exemple n°1 est répété mais on n'utilise comme matière première un précondensat urée-formol (Formol : 56,1 %, urée : 23 %, $\frac{F}{U}$ = 4,88) au lieu d'une solution de formol.

Dans un réacteur muni d'un réfrigérant, d'un agitateur et d'un dispositif de chauffage et de refroidissement, on introduit 1197 parties de ce précondensat, 199 parties d'urée perles, 153 parties de mélamine et 279 parties d'eau. On chauffe à 95 - 100°C pendant 10 minutes ; ensuite à 95°C, on acidifie à pH 5,9 avec 1,1 ml d'acide formique 36 %. On condense à 85 - 95°C jusqu'à ce que la viscosité à 40°C de la résine donne un temps d'écoulement de 26 secondes mésuré avec une coupe DIN munie d'une filière de 6mm. Alors, on introduit 672 parties d'urée perle et on poursuit le réaction pendant 20 minutes à 60°C. On ajoute alors 2 ml de soude 25 % pour obtenir un pH voisin de 8. Les caractéristiques de la résine obtenue sont les suivantes :

| | | |
|---|---|---|
| Viscosité 20°C | : | 860 m Pa.s |
| - Extrait sec | : | 65 % |
| - Densité 20°C | : | 1,287 |
| - pH | : | 8,3 |
| - Temps de gel à 100°C (avec 5% d'une solution de NH₄ Cl à 15%) | : | 82 secondes |
| - Conservation à 20°C | : | 1180 m Pa.s après 2 mois |

Cette résine a été utilisée pour la fabrication de panneaux de particules dans les mêmes conditions que celles décrites dans l'exemple n°1. Les caractéristiques des panneaux obtenues sont les suivantes :

| - Epaisseur (mm) | : | 20,08 |
|---|---|---|
| - Masse volumique (kg/m3) | : | 631 |
| - Gonflement dans l'eau 20.°C 24 h | | |
| . Suivant norme NF | : | 14,0 % |
| . Suivant norme DIN | : | 14,4 % |
| - Traction perpendiculaire (daN/cm2) | : | 7,9 |
| .- Formol perforateur (mg/100g panneau sec) | : | 7,5 |

## Exemple 4

On prépare de façon connue, à titre de comparaison, la résine suivante : Dans un réacteur muni d'un réfrigérant, d'un agitateur et d'un dispositif de chauffage et de refroidissement, on introduit 2688 parties de formol 40 %, le pH est amené vers 8 par addition de lessive de soude puis on ajoute 1024 parties d'urée solide. Le mélange est chauffé à l'ébullition, ensuite le pH est ajusté à 5,0 par de l'acide formique.

La condensation conduite à une température voisine de l'ébullition pendant une période de 45 minutes, est stoppée en ajustant la valeur de pH à 8 par addition de soude. On ajoute alors 248 parties de mélamine et on poursuit la condensation en maintenant la valeur pH vers 8 et la température voisine de l'ébullition pendant encore 20 minutes. A ce stade on ajoute 820 parties d'urée solide puis la résine est concentrée sous vide jusqu'à une teneur en matières sèches de 65 % environ.

La résine est ensuite refroidie à température ambiante. Elle renferme 6 % mélamine environ et présente un $\frac{F}{NH_2}$ de 0,532. La résine obtenue présente les caractéristiques suivantes:

| Viscosité 20°C | : | 650 m Pa.s |
|---|---|---|
| - Extrait sec | : | 65 % |
| - pH | : | 8,5 |
| - Densité · | : | 1,286 |
| - Temps de gel à 100°C (avec 5 % d'une solution de chlorure d'ammonium à 15%) | : | 125 sec. |
| - Temps de gel à 80°C (avec 10 % solution NH₄ cl 15 %) | | 450 sec. |
| - Conservation à 20°C | : | 3000 m Pa.s après 2 mois |

Les panneaux fabriqués avec cette résine, toujours dans les conditions de l'exemple 1, présentent les caractéristiques suivantes : A titre de comparaison (sans rapport avec l'invention) :

| - Epaisseur (mm) | : | 20,11 |
|---|---|---|
| - Masse volumique (kg/m3) | : | 629 |
| - Gonflement dans l'eau 24 h à 20°C | | |
| . Suivant norme NF | : | 15,2 |
| . Suivant norme DIN | : | 15,7 |
| - Traction perpendiculaire (daN/cm2) | : | 7,1 |
| - Formol perforateur (mg/100g panneau sec) | : | 8,9 |

**Revendications**

1. Procédé de fabrication de résines urée-formol contenant au plus 10 % de mélamine et présentant un rapport molaire final $\dfrac{F}{NH_2}$ compris entre 0,5 et 0,575 les groupements $NH_2$ étant la somme totale des groupements $NH_2$ d'urée et de mélamine mises en oeuvre, selon lequel on condense dans une première étape, une partie de l'urée, du formol à pH acide, puis on ajoute de la mélamine à pH basique, l'urée restant étant ajoutée dans une troisième étape à pH basique, caractérisé en ce que la mélamine est ajoutée dans la première étape de condensation de l'urée et d'une source de formol, cette condensation étant conduite à pH acide, la quantité d'urée et de formol mis en oeuvre étant telle que le rapport molaire $\dfrac{F}{NH_2}$ à cette étape étant au plus égal à 1,5, les équivalents molaires des groupements $NH_2$ étant la somme totale des $NH_2$ d'urée et de mélamine mis en oeuvre.

2. Application à la fabrication de panneaux particules.

| ))) Office européen | **DECLARATION** | Numéro de la demande |
| des brevets | qui selon la règle 45 de la Convention sur le brevet européen est considérée, aux fins de la procédure ultérieure, comme le rapport de recherche européenne | |

| La division de la recherche estime que la présente demande de brevet européen n'est pas conforme aux dispositions de la Convention sur le brevet européen, au point qu'une recherche significative sur l'état de la technique ne peut être effectuée au regard de toutes les revendications. Raison: | CLASSEMENT DE LA DEMANDE (Int. Cl.⁴) |
|---|---|
| Revendication 1 incohérente: Procédé en 3 étapes avec addition de mélamine dans la deuxième étape en milieu basique, caractérisé par l'addition de la mélamine dans la première étape en milieu acide - Exemple 1 en contracdiction avec les différentes interprétations possibles de la revendication 1. | C08G12/38 C08L97/02 B27N 3/04 |

| Lieu de la recherche | Date d'achevement de la recherche | Examinateur |
|---|---|---|
| Berlin | 26.02.89 | C.G. Idez |

OEB Form 1504    06.78